# EUROPEAN PATENT APPLICATION

(11) **EP 4 368 078 A1**
(43) Date of publication of application: **15.05.2024**
(21) Application number: 22206831.4
(22) Date of filing: 11.11.2022
(51) Int. Cl.: A47J 31/36, B65D 85/804

(54) **BEVERAGE PREPARATION SYSTEM**

(71) Applicant: B&T Entwicklungs- und Vermarktungsgesellschaft mbH, 22297 Hamburg (DE)
(72) Inventor: The designation of the inventor has not yet been filed
(74) Representative: Frei Patent Attorneys

(57) **Abstract**

The beverage preparation system comprises at least one capsule (1) comprising a biodegradable material, and a beverage preparation machine. The beverage preparation machine is equipped to brew a beverage from the beverage preparation substance, by injecting a liquid into the capsule, and to allow the thus prepared beverage to flow out of the capsule. To this end, the beverage preparation machine comprises a brewing chamber that receives the capsule for the brewing process. The system further has a damaging structure (121) for damaging the capsule at a place different from the locations where liquid is injected and allowed to flow out for the brewing process.

## Description

The present invention is in the field of systems for preparing beverages using capsules that contain an ingredient, especially an extraction material for example coffee powder or crushed tea leaves.

Of special interests are systems that comprise capsules of biodegradable material, because of sustainability considerations However, it is a challenge to provide biodegradable materials that have the required properties. Required properties include a sufficient mechanical stability, both, at room temperature and at the temperature of the injected liquid, the capability of being pierced for liquid injection into the capsule and for liquid removal from the capsule, as well as the property of providing a liquid barrier in combination with the property of providing an oxygen barrier. Because biodegradable materials having all these properties are not readily available, it has been proposed to make the capsule from a polymer multilayer that has a plurality of layers of different compositions. For example, one layer can be an efficient water barrier whereas another one of the layers can act as oxygen barrier, and/or at least one layer ensures the sufficient mechanical stability, whereas at least one other layer has the barrier properties, etc.

However, such a layered structure may lead to a delayed biodegradation process, because in the complex biodegradation process, the outer layers are accessible only from the outer side, and for biodegradation of inner layers, first the outer layers need to be disintegrated.

It is therefore an object of the present invention to provide a capsule-based system for preparing beverages which system overcomes drawbacks of the prior art and leads to an improved biodegradability without compromising the barrier properties and mechanical properties of the capsule material.

This object is achieved by the invention as defined in the claims.

According to an aspect of the present invention, a beverage preparation system is provided, the system comprising at least one capsule comprising a biodegradable material, and a beverage preparation machine. The capsule encapsulates a beverage preparation substance, especially an extraction material such as ground coffee or crushed tea leaves. The beverage preparation machine is equipped to brew a beverage from the beverage preparation substance, by injecting a liquid into the capsule, and to allow the thus prepared beverage to flow out of the capsule. To this end, the beverage preparation machine comprises a brewing chamber that receives the capsule for the brewing process. In many embodiments, the brewing chamber is formed by a brewing module that has parts movably relative to each other so that a movement is possible between a state in which the brewing chamber is open for insertion of the capsule and/or for ejection of the capsule from the brewing chamber, and a state in which the brewing chamber is closed for the brewing process.

For injecting the liquid and/or for allowing the beverage to flow out of the capsule, the beverage preparation machine comprises at least one piercing device. In many embodiments, the beverage preparation machine will comprise at least one injection-side piercing device for piercing the capsule on one side - for example a bottom side or a top side (a cover side if the capsule comprises a main body and a cover closing off the capsule by being attached to the main body) - and at least one extraction-side piercing device for piercing the capsule on an other, often opposite side (for example a top side or a bottom side, respectively). If this is the case, as is known in the art, there exist the possibilities that the capsule is pierced on both sides upon a movement into the closed state of the brewing chamber, or that the capsule is pierced only on the injection side upon this movement, and a piercing on the extraction side takes place only as a result of the injection of liquid into the capsule.

The at least one location on the capsule at which the capsule is pierced for the injecting and/or for the allowing the beverage to flow out is called "piercing location" The system according to the present invention is characterized by a damaging structure for damaging the capsule at a place different from the piercing location(s).

By this simple measure, the system prepares the capsule for a subsequent biodegradation process even if the capsule is not mechanically pre-treated (shredded) for a for example industrial composting process. It does so in that it enhances the surface for liquid and microbes to act upon the capsule material and especially provides access to inner layers of the multilayer. For example, if the capsule wall has a sandwich structure with two outer layers of a material with a relatively slow biodegradation and an inner layer of a different material, the approach according to the present invention makes possible that the inner layer is subject to disintegration from the very beginning of the biodegradation process by not being protected by the outer layers, due to the damage(s) caused. As a result, also the biodegradation of the outer layers, which may be more difficult to disintegrate, may be more efficient and quicker in that these layers may get into contact with liquid and microbes from both sides.

Especially, if the capsule has a bottom, a cover and a circumferential side wall, the damaging structure may be configured to damage the circumferential side wall.

The damage(s) caused may for example be scars and/or through-going disruptions, such as cuts and/or piercings. The damaging structure may comprise blades and/or tips.

The damaging structure may belong to the beverage preparation machine. Especially, it may be placed in the brewing chamber and/or along a path from the brewing chamber to a receptacle for used capsules into which the capsules get after the brewing process. If the caused damages are scars and not through-going cuts/piercings, then the damaging structure may also be placed along a path into the brewing chamber.

Damaging structures in the brewing chamber may be arranged such that the capsule is not damaged when inserted in the brewing chamber. The damaging then may take place as a reaction of the capsule being slightly inflated upon injection of the liquid. In addition or as an alternative, an ejection mechanism, which impinges on the capsule only when the brewing chamber is opened (but not when it closes around the capsule) may comprise at least a portion of the damaging structure so that the damaging takes place by the opening movement.

The capsule may especially comprise a multi-layer. At least one of the layers, especially all of the layers, may be bio-degradable. In embodiments, the capsule wall may comprise a sandwich structure with two outer layers and at least one inner layer between the outer layers.

The designation "outer layer" when relating to the layered structure of the multilayer in this text refers to the build of the multilayer structure itself. In the capsule, one of the outer layers will be oriented towards the capsule interior, whereas the other one of the outer layers will, relating to the capsule, form an exterior layer and constitute the capsule surface.

If the capsule has a multilayer build, the damaging structure may be such that at least the layer that is the exterior layer of the capsule is disrupted over its entire depth, i.e., such that the damaging structure causes the layer underneath the exterior layer to be exposed.

In the present text, "bio-degradable" may mean biologically degradable according to the European standard EN 13432 (as of the end of 2021). In addition or as an alternative, it may mean biologically degradable according to the European standard EN 14995 (as of the end of 2021). Thus "bio-degradable" especially refers to "biologically degradable according to EN 13432 and/or according to EN 14995.

Hereinafter, embodiments of the present invention are described with reference to drawings. In the drawings, same number designate same or corresponding elements. The drawings show:
- Fig. 1: An example of a capsule;
- Fig. 2: an example of a brewing chamber for the capsule of Fig. 1;
- Fig. 3: a multilayer structure for the capsule;
- Fig. 4: the multilayer structure with damages;
- Fig. 5: a coffee machine;
- Fig. 6: a chute with a damaging structure;
- Fig. 7: a brewing chamber with a damaging structure; and
- Fig. 8: an alternative brewing module with an alternative, cup-shaped capsule.

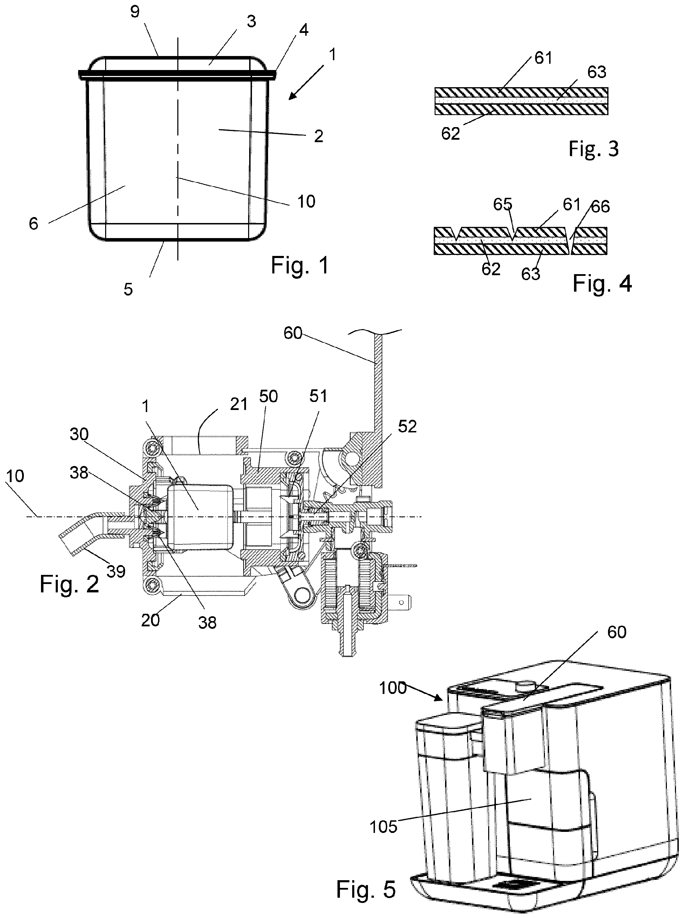

**Figure 1** illustrates an example of a portion capsule. The capsule 1 according to Fig. 1 essentially has the shape of a cube with rounded edges, with an expanse slightly increasing towards the side lying at the top.

The capsule comprises a main body 2 and a cover 3 which is fastened thereon along a peripheral collar 4. The main body forms a capsule bottom 5 and a peripheral side wall 6 which, at its end which is at the outside with respect to the axial directions (axis 10) and which is at the top in the figure, is terminated by the collar 4. The cover is arched outwards, by way of the cover surface 9 which is essentially parallel to the capsule bottom 5 being offset outwards with respect to the peripheral collar 4.

The capsule is configured to be pierced, for the brewing process, for the purpose of injecting a liquid, especially hot water or possibly cold water, into the capsule and for allowing the thus brewed beverage to flow out of the capsule.

**Figure 2** illustrates an example of an accordingly equipped brewing module of a beverage preparation machine, for example coffee machine. The brewing module comprises a brewing module housing 20 and, held and guided by the housing, a discharge device 30 as a first brewing module part, and an injector 50 as a second brewing module part. By way of an operating lever 60, the injector 50 can be moved relative to the housing and to the first brewing module part, between an open position, in which the brewing chamber is open and the operating lever is at the top and a closure position, in which the brewing chamber is closed and the operating lever is folded downwards. Fig. 2 shows the brewing module with the brewing chamber being open and with the capsule 1. The capsule has been inserted through an insert opening 21 which also defines the orientation of the capsule on insertion.

For operation, the brewing chamber is closed by the injector 50 moving towards the discharge device 30 so that the capsule 1 is pierced by injection-side piercing devices 51 and extraction-side piercing devices 38. The brewing liquid flows through a duct 52 and the pierced cut-outs into the capsule 1, where an extraction process takes place. The thus brewed beverage flows out through the extraction-side break throughs caused by the extraction-side piercing devices 38 and an outlet spout 39.

The described brewing module is a manually operated horizontal brewing module adapted to the capsule shape of Fig. 1. Many variants of brewing modules are known in the art, including motorized brewing modules, vertical brewing modules (where the liquid is injected from the top and flows out of the bottom of the capsule), brewing modules for other capsule shapes, etc. The present invention does neither depend on the type of brewing module used nor on the capsule shape. Rather, it can be implemented for all kinds of capsule shapes and all types of brewing modules.

**Figure 3** illustrates a layered structure of the capsule wall. The capsule wall having the layered structure can constitute the main body and/or the cover. The layered structure in the depicted embodiment is illustrated to have two outer layers 61, 62 of a first biodegradable material and in inner layer 63 of a second biodegradable material. The first biodegradable material may serve as a liquid barrier by having corresponding properties, whereas the second biodegradable material may serve as an oxygen barrier.

For biodegradation, for example in an industrial or domestic composting process, the barrier properties cause the process to be relatively slow. **Figure 4** illustrates the concept that the capsule is damaged, especially after the brewing process, especially at a plurality of locations to disrupt the outer layers. Fig. 4 illustrates two scars 65 in the capsule wall in addition to a cut 66 through the capsule wall. In embodiments, the damages caused by the damaging structure may have a dept so that at least on outer layer 61 is locally broken through although also less deep damages may accelerate the degradation process.

**Figure 5** illustrates a beverage preparation machine 100, namely a coffee machine, that contains a brewing module of the kind illustrated in Fig. 2. Underneath the brewing module, the coffee machine comprises a container 105 for used capsules. The brewing module is equipped for allowing the used capsules to fall down into the container 105 when the brewing chamber is opened after the brewing process.

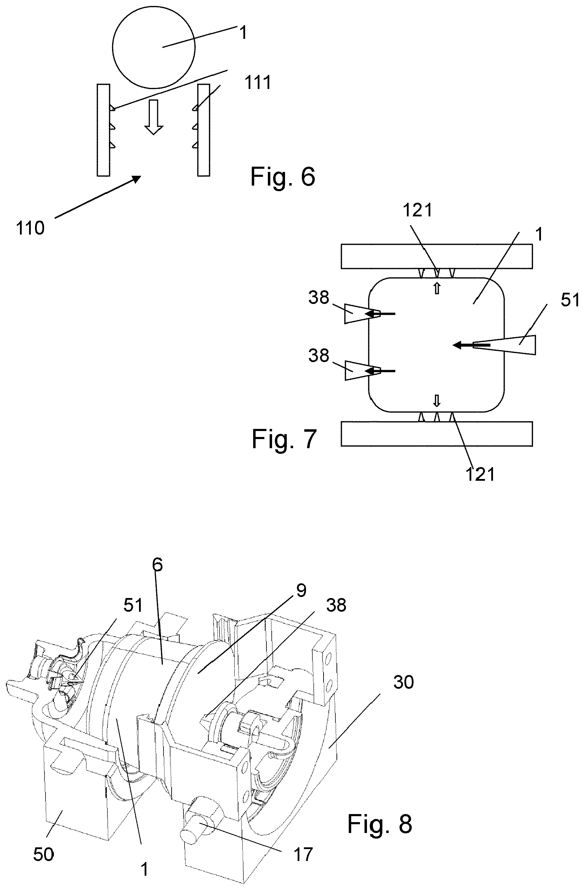

According to embodiments of the present invention, the beverage preparation machine is equipped to damage the capsule by the movement of the brewing module parts when the brewing chamber is opened and/or by the movement of the capsule down into the container 105. This is very schematically illustrated - for a capsule having a round cross section, see Fig. 8 below - in **Figure 6.** Fig. 6 depicts a chute 110 underneath the brewing chamber through which the capsule 1 falls into the container 105. The chute is equipped with small blades 111 that scar the circumferential surface of the capsule 1 on its way through the chute 110.

**Figure 7** illustrates, again schematically, a further possibility. Namely, the brewing module is equipped with micro-piercers being needles 121 (or blades or other structures) that are arranged in a manner that when the capsule is inserted in the brewing chamber and when the brewing chamber is closed, there is no contact between the needles 121 and the capsule 1.

When, during the brewing process, hot water is injected, the flow of the liquid through the capsule 1 encounters some resistance, both, because of the extraction material in the capsule and because the extraction-side piercing devices 38 themselves, to some extent, close the pierced openings they cause in the capsule. The resistance against a flow out of the capsule will cause the capsule to become inflated, which effect is enhanced by the material of the capsule becoming softer as an effect of the heat transferred from the liquid. This inflation, illustrated by double arrows in Fig. 7, may cause the capsule wall to be pressed towards the needles 121, which scar or pierce the capsule and thereby damage the circumferential capsule wall.

**Figure 8** illustrates a brewing module for a cup-shaped capsule 1 with a round cross section and an accordingly annular circumferential capsule wall 6. The considerations, including the ones referring to Fig. 7, also apply to capsules having such or other shapes.

## Claims

1. A beverage preparation system comprising at least one capsule (1) comprising a biodegradable material, the capsule encapsulating a beverage preparation substance, and a beverage preparation machine (100) equipped to prepare a beverage from the beverage preparation substance and from a liquid by injecting the liquid into the capsule (1), the beverage preparation machine (100) comprising a brewing chamber shaped to receive the capsule (1), with an outflow channel for the beverage, the beverage preparation machine comprising a at least one piercing device (51, 38) for piercing the capsule, at a piercing location, when the capsule is in the brewing chamber, for the purpose of injecting the liquid into the capsule and/or for allowing the beverage to flow out of the capsule, **characterized in that** the system further comprises a damaging structure (111, 121) for damaging the capsule (1) at a place on the capsule surface different from the piercing location.

2. The beverage preparation system according to claim 1, wherein the damaging structure is a scarring structure equipped to make scars in the capsule.

3. The beverage preparation system according to claim 1 or 2, wherein the damaging structure comprises at least one blade (111) and/or at least one needle.

4. The beverage preparation system according to any one of the previous claims, wherein the capsule comprises top surface portion (9), a bottom surface portion (5) and circumferential side wall (6) between the bottom and top surface portions, wherein the at least one piercing device (38, 51) of the beverage preparation machine comprise at least one piercing device arranged to pierce the top surface portion (9) and at least one piercing device arranged to pierce the bottom surface portion (5), and the damaging structure (111, 121) is arranged to damage the circumferential side wall.

5. The beverage preparation system according to any one of the previous claims, wherein the damaging structure (111, 121) is a structure of the beverage preparation machine (100).

6. The beverage preparation system according to any one of the previous claims, wherein the damaging structure (121) is, at least in part, arranged to damage the capsule (1) when it is inflated by the liquid in the brewing chamber.

7. The beverage preparation system according to any one of the previous claims, where the damaging structure is, at least in part, arranged to damage the capsule as a result of the brewing chamber being opened.

8. The beverage preparation system according to claim 7, wherein the machine comprises a receptacle (105) for used capsules and is equipped cause capsules to move from the brewing chamber to the receptacle upon opening the brewing chamber, wherein the damaging structure (111) is placed to damage the capsule (1) on its way from the brewing chamber into the receptacle (105).

9. The beverage preparation system according to any one of the previous claims, wherein the capsule has a multilayer structure.

10. The beverage preparation system according to claim 9, wherein the multilayer structure is a sandwich structure with two outer layers (61, 62) and at least one further layer (63) arranged between the outer layers (61, 62).
